# EUROPEAN PATENT SPECIFICATION

(11) **EP 1 119 408 B1**
(45) Date of publication and mention of the grant of the patent: **03.01.2007**
(21) Application number: 99931601.1
(22) Date of filing: 07.07.1999
(51) Int. Cl.: B01J 20/16, B01D 53/02, B01D 53/70, B01D 53/64, B01D 53/50

(54) **METHOD FOR MANUFACTURING A SORBENT, A SORBENT OBTAINED WITH SUCH METHOD, AND A METHOD FOR CLEANING A STREAM OF HOT GAS**
VERFAHREN ZUR HERSTELLUNG EINES SORPTIONSMITTELS, NACH DIESEM VERFAHREN ERHALTENES SORPTIONSMITTEL UND VERFAHREN ZUR REINIGUNG EINES HEISSEN GASSTROMS
PROCEDE DE PRODUCTION D'UN SORBANT, SORBANT AINSI OBTENU ET PROCEDE D'EPURATION D'UN COURANT DE GAZ CHAUD

(30) Priority: 14.08.1998 NL 1009870
(43) Date of publication of application: 01.08.2001
(73) Proprietor: CDEM Holland B.V., 6961 ED Eerbeek (NL)
(72) Inventor: VOOGT, Nicolaas, NL-7361 TA Beekbergen (NL); BIERMANN, Joseph, Jan, Peter, NL-3712 AH Huis Ter Heide (NL)
(74) Representative: Van Breda, Jacobus
(86) International application number: PCT/NL1999/000431
(87) International publication number: WO 2000/009256

(56) References cited:
- EP-A- 0 479 350
- EP-A- 0 747 452
- WO-A-96/06057
- DE-A- 3 443 722
- US-A- 5 897 688
- DATABASE WPI Section Ch, Week 9029 Derwent Publications Ltd., London, GB; Class E36, AN 90-222216 XP002116173 & JP 02 152520 A (MITSUBISHI HEAVY IND CO LTD), 12 June 1990 (1990-06-12)

## Description

The invention relates to a use of a product manufactured from a calcium- and kaolin-comprising base material such as residues released during the production of paper and during the working up of waste paper for reuse.

From WO 96/06057 it is known that the base material is thermically treated in a fluidized bed above which there is a freeboard, wherein the fluidized bed is operated at a temperature between 720 and 850°C, and the temperature in the freeboard is maintained at 850°C or below, whereby the base material converts to a substantially metakaolin-comprising substance.

According to the invention it is proposed to use this substance as a sorbent for the removal of metal from a hot gas stream. Within the scope of the invention, a hot gas stream is understood to be a gas stream in which the metals or metal compounds to be removed are present as vapour.

Surprisingly it has been shown that in contrast with known mixtures of sorbents, which are individually substantially directed at the removal of some metals, such as kaolin and calcium hydroxide, the sorbent obtained in accordance with the invention not only efficiently removes metals such as, for instance, lead, cadmium, and lead in the presence of cadmium, but is also effective in removing cadmium in the presence of lead. As already known, the presence of more than one metal in a gas stream to be cleaned, generally has a negative effect on the metal removal efficiency of a prior art sorbent directed at one of those metals. This is not the case with the sorbent that is used according to the invention. It has moreover been shown that the product that is used according to the invention is substantially functional because of its binding via a reactive sorption mechanism rather than removal in accordance with the less desirable pore-diffusion mechanism. In contrast with known mixtures of kaolin or calcium hydroxide which act as sorbent, the product that is used according to the invention also appeared to be effective when chlorine-comprising components are present in the gas stream.

The results of the invention can be achieved particularly effectively if the temperature of the freeboard is maintained at 800°C or below. It is especially desirable that the temperature of the freeboard is kept lower than the temperature of the fluidized bed.

It is to advantage that together with the base material sand grains with a diameter in the region of 0.5-2.0 mm are introduced into the fluidized bed. The sand grains are able to promote heat transfer, allowing quick and correct temperature adjustment in the fluidized bed and in the freeboard. In addition, these sand grains may play a supporting role in obtaining sorbent particles having a diameter of at least 0.5 mm due to the fact that the core of said particles are provided with a sand grain. These relatively heavy particles are formed in the fluidized-bed process as by-product of the actual powdery sorbent, but they are suitable for use as sorbent in very simple gas cleaning applications. Such heavy particles can be introduced quite easily into a gas stream and removed again after use, without the need for complex introduction and removal apparatuses.

The product that is applied as sorbent according to the invention is in a further aspect of the invention preferably formed such that at least 80% of the particles have a diameter of at least 2 µm. This is a large enough diameter to allow the powdery sorbent, after it has been used for the removal of metal from the gas stream, to be removed from the gas stream by means of standard dust collecting techniques, so that the costs can be kept low.

Preferably the sorbent according to the invention comprises at least approx. 20% by weight of metakaolin. In the opinion of the inventors, this component promotes the reactive sorption quality of the sorbent according to the invention.

Characteristic of the powdery sorbent according to the invention is that indistinguishably present in each metakaolin-comprising particle there are also micron scale calcium-comprising compounds. This was shown by measuring with an electron microscope equipped with X-ray analysis (EDX) by which means calcium, aluminium and silicon can be analyzed. This measurement has shown that in the metakaolin-comprising particle one cannot differentiate between the areas of calcium compounds and metakaolin. It is believed that with regard to activity, this aspect of the sorbent according to the invention distinguishes it from the known sorbents by the simultaneous trapping of different metals from a hot gas stream, either in the presence or not in the presence of anions such as chloride, such that for all these metals a good metal removal efficiency is provided.

The calcium-comprising compounds, in particular calcium carbonate and calcium hydroxide have the advantage that when the sorbent is used at high gas temperatures (for example approx. 1000°C), the decomposition of said calcium compounds cause the sorbent particles to disintegrate, with the result that the sorbent's metal removal efficiency can be increased. It has been shown, moreover, that the sorbent according to the invention possesses cementing properties which are retained even after use while, in addition, the leaching properties of the sorbent after application are particularly favourable, so that reuse in the building trade would seem possible.

The remarkable properties of the sorbent according to the invention become further apparent when the sorbent is used for the cleaning of a gas stream in general. The sorbent is then especially suitable for the, at least, partial removal of SOx from the gas stream and also for the, at least, partial removal of dioxins from the gas stream. As mentioned above, the sorbent is also effective in the removal of anions.

The invention will now be further elucidated with reference to a few exemplary embodiments in which the sorbent according to the invention is used and a sorbent in a composition according to the prior art.

### EXAMPLE 1

Various heavy metals and combinations of heavy metals comprised in a gas stream, are subjected to a cleaning process using the following sorbents: kaolin alone, calcium hydroxide alone, kaolin in combination with calcium hydroxide, and the sorbent according to the invention. The various sorbents exhibited the following activity.

**TABLE A**

| Sorbent | Kaolin alone | Ca(OH)₂ alone | Kaolin and Ca(OH)₂ | Sorbent acc. to invention |
|---|---|---|---|---|
| Metal | | | | |
| Lead alone | good | poor | good | good |
| Cadmium alone | poor | good | good | good |
| Lead in pres. of cadmium | * | * | good | good |
| Cadmium in pres. of lead | poor | * | moderate | good |

| | | | | |
|---|---|---|---|---|
| * = not measured | | | | |

It was further shown that, in contrast with the sorbent of the prior art, the sorbent according to the invention exhibits on all metals a so-called reactive sorption mechanism, which has a favourable effect on the leaching properties. The sorption results shown in the above Table were repeated, wherein the gas also contained chlorine-comprising compounds. Even under those conditions the sorbent according to the invention appeared to be still active.

### EXAMPLE 2

The sorbent according to the invention is applied for the removal of anions from a gas stream, such as anions from which SOx can be formed. The gas stream comprised 4000 mg SOx (calculated as SO₂) per Nm³ waste gas. To this gas stream 90 g/Nm³ sorbent according to the invention is added. After sorption of the SOx, the SOx concentration in the cleaned waste gasses was less than 10 mg per Nm³ waste gas. Thus the removal efficiency is better than 99%.

The SOx-loaded sorbent is shown to be better resistant to leaching out of this compound than other media. In Table B below, the results are shown to compare sulphate leachability when using the sorbent according to the invention and when using portland cement (OPC). To this end sulphur-containing fly ash is added to a SOx-loaded sorbent according to the invention, after which the leachability of sulphate is measured. As comparison a similar amount of sulphur-containing fly ash is added to a commercially available portland cement sample. Then, in a rotating pan, water is added to both samples to obtain moist pellets which are allowed to harden for 7 or 28 days, respectively. In this manner the following sulphate leachability results were obtained.

**TABLE B**

| Binding agent | OPC | | 70 % sorbent, 30 % OPC | |
|---|---|---|---|---|
| Setting time | 7 days | 28 days | 7 days | 28 days |
| Sulphate leachability (mg/kg) | 2240 | 1100 | 670 | 660 |

### EXAMPLE 3

The sorbent according to the invention is used also for trapping dioxins from a gas stream. To this end such a gas stream is contacted with the sorbent according to the invention in a concentration of 90 g/Nm³. The gas is contacted with the sorbent for less than 10 seconds, after which the sorbent is separated from the gas stream by means of a baghouse filter. The dioxin concentration being introduced was 1.909 ng/Nm³. Of this, 1.863 ng/Nm³ (that is to say more than 97%) were trapped by the sorbent, collected in the baghouse filter. 0.037 ng/Nm³ (approximately 2%) were present on sorbent particles found after the dust filter, and 0.009 ng/Nm³ (that is to say less than 0.5%) were not trapped by the sorbent and were still present in the gas stream.

## Claims

1. Use of a product manufactured from a calcium-and kaolin-comprising base material such as paper or residues released during the production of paper and during the working up of waste paper for reuse, wherein the base material is thermically treated in a fluidized bed above which there is a freeboard, wherein the fluidized bed is operated at a temperature between 720 and 850°C, and the temperature in the freeboard is maintained at 850°C or below, whereby the base material converts to a substantially metakaolin-comprising substance, **characterized in that** said substance is applied as a sorbent for the removal of metal from a hot gas stream.

2. Use according to claim 1, **characterized in that** the temperature of the freeboard is maintained at 800°C or below.

3. Use according to claim 1 or 2, **characterized in that** the temperature of the freeboard is kept lower than the temperature of the fluidized bed.

4. Use according to any one of the claims 1-3, **characterized in that** together with the base material sand grains with a diameter in the region of 0.5-2.0 mm are introduced into the fluidized bed.

## Patentansprüche

1. Verwendung eines Erzeugnisses hergestellt aus einem Kalzium und Kaolin enthaltendem Ausgangsmaterial wie Papier oder gelösten Rückständen während der Herstellung von Papier und während der Verarbeitung von Altpapier zur Wiederverwendung, wobei das Basismaterial wärmebehandelt ist in einem Wirbelbett über dem es ein Freibord gibt, wobei das Wirbelbett bei einer Temperatur zwischen 720 und 850°C betrieben wird, und die Temperatur in dem Freibord bei 850°C oder darunter gehalten wird, wodurch sich das Ausgangsmaterial umwandelt in eine im Wesentlichen Metakaolin enthaltende Substanz,
**dadurch gekennzeichnet, dass**
diese Substanz als ein Sorptionsmittel aufgebracht wird für das Entfernen von Metall aus einem Heißgasstrom.

2. Verwendung gemäß Anspruch 1
**dadurch gekennzeichnet, dass**
die Temperatur des Freibords bei 800°C oder darunter gehalten wird.

3. Verwendung gemäß Anspruch 1 oder 2,
**dadurch gekennzeichnet, dass**
die Temperatur des Freibords niedriger beibehalten wird als die Temperatur des Wirbelbetts.

4. Verwendung gemäß einem der Ansprüche 1 bis 3,
**dadurch gekennzeichnet, dass**
zusammen mit dem Ausgangsmaterial Sandkörner mit einem Durchmesser im Bereich von 0,5 bis 2,0 mm in das Wirbelbett eingebracht werden.

## Revendications

1. Utilisation d'un produit fabriqué à partir de matières premières comprenant du calcium et du kaolin tel que le papier ou les résidus libérés lors de la production de papier et durant le malaxage des déchets de papier pour une réutilisation, dans lequel la matière première est traitée thermiquement dans un lit fluidisé sur lequel il y a un franc-bord ou freeboard dans lequel le lit fluidisé fonctionne à une température entre 720 et 850°C, et la température dans le franc-bord est maintenue à 850°C ou moins, par lequel la matière première convertie en une substance comprenant essentiellement du métakaolin, **caractérisée en ce que** ladite substance est appliquée comme un agent de sorption pour retirer un métal d'un courant de gaz chaud.

2. Utilisation selon la revendication 1, **caractérisée en ce que** la température du franc-bord est maintenue à 800°C ou moins.

3. Utilisation selon la revendication 1 ou 2, **caractérisée en ce que** la température du franc-bord est maintenue plus basse que la température du lit fluidisé.

4. Utilisation selon l'une quelconque des revendications 1 à 3, **caractérisée en ce qu'**ensemble avec le matériau de base les grains de sable avec un diamètre dans la gamme de 0,5-2,0 mm sont introduits dans le lits fluidisé.
